# EUROPEAN PATENT APPLICATION

(11) **EP 0 917 336 A2**
(43) Date of publication of application: **19.05.1999**
(21) Application number: 98115599.7
(22) Date of filing: 19.08.1998
(51) Int. Cl.: H04M 15/00, H04M 15/28

(54) **Dynamic tariff comparison and selection system for determining the most favourable telecommunications service provider**

(30) Priority: 13.11.1997 DE 19750290
(71) Applicant: International Business Machines Corporation, Armonk, N.Y. 10504 (US)
(72) Inventor: Gumbrich, Stefan, 69117 Heidelberg (DE); Sandvoss, Jochen, 68159 Mannheim (DE); Schmid, Marcus, 68535 Edingen-Neckarhausen (DE)
(74) Representative: Teufel, Fritz, Dipl.-Phys.

(57) **Abstract**

The present invention describes a process for determining and creating the most favourable telephone connection between caller and receiver. The caller specifies before the start of the conversation an order for carrying out a conversation. This may be effected over a separate data processing system which is connected to a comparison and selection system or directly via the dialling process. The comparison and selection system which is connected with the telecommunications service providers via a data network, receives a quotation for the telecommunications service provider for each order and determines from the incoming quotations the most favourable tariff and then makes a connection through the switching system between the caller and receiver. The advantage of the present invention resides in the fact that telephone conversations are always carried out via the most favourable telecommunications service provider and that the telecommunications service providers can always make optimum use of their transmission capacities. The use of a comparison and selection system ensures that up-to-date tariff information from the telecommunications service providers is always accessed. Central databases for the storage of all tariff information are therefore redundant.

## Description

The present invention describes a method for selecting the most favourable telecommunications service provider by means of a dynamic tariff comparison and selection system.

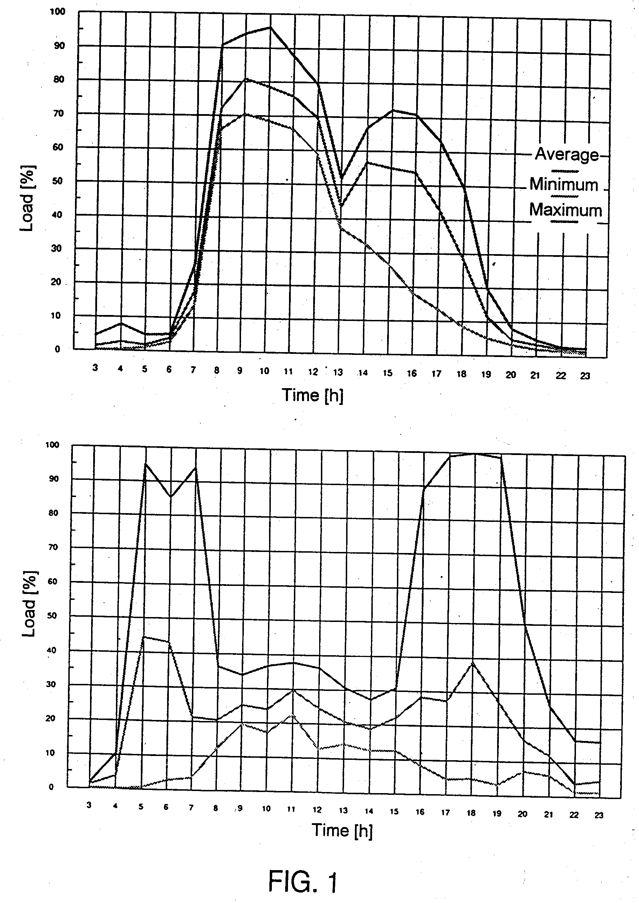

An increasing number of telecommunications service providers (telephone network operators) are offering their services. This was foreseeably further intensified by the lifting of the telecommunications monopoly on the 1st January 1998. There are, in some cases, considerable differences between the tariffs of the individual service providers. This creates a range of questions and problems, both for the service provider and for the user. The user would like his telecommunications costs to be minimised as far as possible. His aim is, for each transmission (telephone conversation, data transfer) to select the most favourable provider. The telecommunications service provider would like to lay down his tariff in such a way as to make optimum use of his existing transmission capacity and to obtain the highest possible return for it. Existing user behaviour leads to widely varying loadings. FIG. 1 shows example curves for a large German telecommunications service provider.

This varying loading leads to high costs for the telecommunications service provider, since the network must be dimensioned in such a way that adequate network capacity is available even at peak periods.

The present tariffs are generally static and are established for a fixed period of time. Change in user behaviour is generally not taken into account at all or is only considered very inadequately in setting the tariff. One example of this is setting the tariff by time of day.

Since the tariffs of the individual telecommunications service providers differ, special systems and methods have appeared on the market for selecting the most favourable supplier. These methods and/or systems are usually summarised under the general heading "least cost routing". What these methods and/or systems have in common is that the tariff information from the telecommunications service providers is collected centrally in the form of tables, where the tables can be arranged according to various allocation and decision criteria (e.g. area codes, length of conversation, day of the week). If the table is arranged, for example, according to area code, the most favourable telecommunications service provider is selected through the area code. The tables are stored electronically and the allocation of a suitable telecommunications service provider for a particular telephone conversation is carried out by a program.

The tables are compiled once and reflect the tariffs valid at that particular point in time. Changes in the tariff of one telecommunications service provider necessarily means that the whole table has to be recompiled.

Japanese Patent JP 62055093 describes a further embodiment of the "least cost routing" (LCR) where the tables also take into account time aspects of the individual telecommunications service providers. This results in the tables becoming ever more complex and more difficult to match.

Australian Patent AU 95 34289 describes a "least cost routing system" in which the tariff information is stored on a central database. The central database contains a static LCR decision table, which contains the results of a comparison of the tariffs of the various telecommunications service providers. Some of this information, which is frequently employed by the user, is stored on the user's system. The selection of the most favourable telecommunications service provider is effected using this data.

Japanese Patent JP 6284176 describes a further "least cost routing system" in which the decision as to which telecommunications service provider the conversation is to use is also dependent on the duration of the conversation. This information is also based on conventional LCR with static locally derived decision tables.

It is therefore the task of the present invention to provide a method which optimises both aspects of the telecommunications process, namely ensures an optimal loading of the network and, at the same time, makes it possible to access the currently most favourable telecommunications service provider.

This task is fulfilled by the features of Claim 1. Advantageous embodiments are set out in the sub-claims.

The advantage of the present invention resides in the fact that it ensures that telephone conversations always take place by way of the most favourable telecommunications service provider and that the telecommunications service providers can always make optimal use of their transmission capacities. The use of a comparison and selection system guarantees that current tariff information is always asked of the telecommunications service providers. Central databases for the storage of the tariff information can thus be dispensed with.

The present invention will be explained in more detail using preferred embodiments, where
- FIG. 1: shows the load on a telephone network over a period of 4 weeks
- FIG. 2: shows an Internet-oriented implementation of the present invention, and
- FIG. 3: shows an implementation of the present invention in a telephone network.

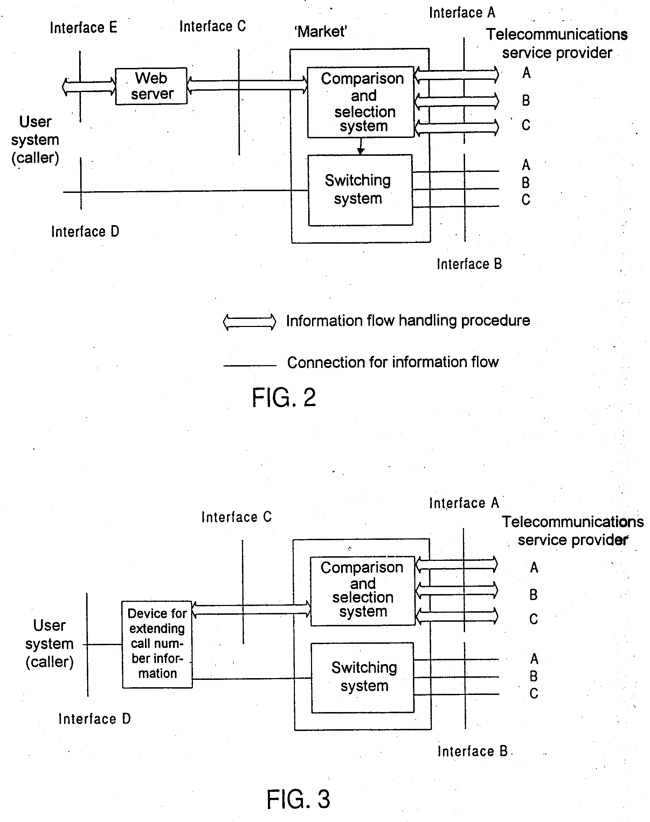

FIG. 2 describes an embodiment of the present invention where the order to carry out a telephone conversation is sent over a separate network to the comparison and selection system.

The present invention relates to the concept of a so-called telephonic 'market'. The telephone 'market' consists of a comparison and selection system (so-called 'broker') and a relay centre (so-called switch). It is assumed here that the telecommunication systems offered are equivalent and differ only in their tariffs. The exchange enables the user to negotiate the tariff for each service. The 'telephonic market' is technically a program which is able to ensure an exchange of information with telecommunication service providers which contains a comparison and selection algorithm (a so-called 'broker function') in order to select the most favourable tariff and to make a connection to the chosen telecommunication service provider (a so-called 'switch').

The user communicates one or more telephone orders to the broker. This may take place via a separate web interface - as shown in FIG. 2. The broker makes contact, for example via the telephone network or the Internet with the telecommunication service providers and requests the tariff for the requested telephone order. The telecommunication service provider communicates his current tariff for the requested telephone order to the broker. Based on the communications from the telecommunication service providers the broker determines the most favourable tariff and orders the switching system to make the desired connection via the most favourable telecommunication service provider.

The interfaces for the individual components in FIG. 2 are described in more detail below:

Connection of the telecommunication 'market' to the telecommunication service provider

The 'market' is connected to the telecommunication service providers through two interfaces. Interface A serves for the signalling for transacting a tariff. Interface B serves for a suitable connection to the telephone network,

### Negotiations with a telecommunication service provider

The negotiations be handled in several phases or in a single phase:

With several phases the broker first obtains a quotation from all connected telecommunication service providers. Subsequently, the most favourable quotation is identified. In the following phase the telecommunication service provider is requested to provide a further quotation which is below the most favourable quotation received to that point. The process has a time limitation.

With single phase the most favourable quotation is selected directly from the first quotation.

The connection between broker and telecommunication service provider (Interface A) is effected with the aid of a secure protocol via data networks, e.g. Internet.

### Connection of the user to the telecommunications 'market'

The user is connected via two interfaces with the telecommunications 'market'. Interface C serves for signalling to receive a quotation. Interface D represents the appropriate connection to the telecommunications network.

### Receipt of a quotation by the user

Various solutions can be considered. FIG. 2 describes one solution in which the user obtains the quotation from the telecommunications 'market' via a separate interface which is independent of the telephone network, e.g. the Internet.

A further solution is described in FIG. 3. The user makes a connection to the target address by calling a telephone number. Through the device for extending the call number information the connection is made, not to the target address, but to the telecommunications 'market'. The function of the telecommunications 'market' and its connection to the relevant telecommunication service provider corresponds to the description in FIG. 2. This solution requires a modification of the user's terminal equipment, because the terminal device must be expanded with a device to extend the call number information. Technically, this extension can be implemented as follows:

The telephone number produces a data packet which is modified by the "device for extending the call number information" in such a way that the data packet is first sent to the telecommunications 'market'. The data packet is reproduced and sent to the relevant telecommunication service provider. The telecommunication service provider evaluates the data packet and determines, e.g. using tables, the current tariff for the telephone conversation requested and sends the data packet including the current tariff of the telecommunication service provider back to the telecommunications 'market'. A comparison and selection algorithm, which is a component of the telecommunications market, determines which is the most favourable telecommunications service provider from the data packet received with the tariff information. The telecommunications 'market', by way of the switching system, which is likewise a constituent of the telecommunications 'market', creates a connection to the receiver. A connection to the user is made at the same time.

In an alternative simplified form of implementation, a switch in the telecommunications 'market' can be omitted:

The telecommunications 'market' produces a data packet with network hunting and the tariff of the most favourable telecommunications service provider. This packet is sent to the device for extending the call number information which finally makes the connection to this network preselection.

The disadvantage of this alternative, however, is the increased signalling expenditure between the telecommunications 'market' and the device for extending the call number information as well as the generally longer time for making the connection.

The telecommunications 'market' function must ensure that a quotation from a telecommunications service provider can only be employed by the user who has asked for the quotation. One possibility is for the telecommunications 'market' to make direct connection to the most favourable telecommunications service provider through the switching system. The caller, here the user, is connected by Call Back. A further possibility would be for the caller/user to receive, in addition to the most favourable telecommunications service provider, a token (key). In making the connection the token must also be supplied in addition to the call number. In this case tokens should have a limited period of validity.

The telecommunications 'market', which consists of a comparison and selection system and a switching system, is described in more detail below:

### The comparison and selection system (so-called broker)

The 'broker' receives the order from the user and passes it to the telecommunications service provider. From the telecommunications service providers' quotations it selects the most favourable quotation. In the simplest case the pricing is carried out exclusively by the telecommunications service provider. In this case the task of the 'broker' is only to select the most favourable quotation from several telecommunications service providers.

The following steps are carried out:

The client requests a telecommunications connection by way of Interface C. For this, he provides the parameters: target of the connection and acceptable price (FIG. 2). The 'broker' communicates the request to the telecommunications service provider connected through Interface A. For this, he provides as parameters the source and the target of the connection. The telecommunications service provider responds with a time-limited quotation.

The 'broker' selects the most favourable quotation which lies below the acceptable price.

The 'broker' passes to the switch the necessary data to enable a connection to be made.

### The switching system (so-called switch)

A distinction must be drawn between two possible methods of operation:

In the Call Back procedure the switch receives a connection order from the 'broker'. It then first makes a connection to the user. Then it commences to make a connection to the target number through the selected telecommunications service provider.

In the token (key) procedure, the switch gets the order to make the connection from the user as before. In addition it sends the user the token obtained during the negotiation phase. With the aid of this information the switching system can arrange to make the user's connection at a previously negotiated quotation.

## Claims

1. Method for determining and creating the most favourable telephone connection between caller and receiver, characterised by the following steps:
a) setting up an order for the conduct of a telephone conversation through the caller
b) sending the order to a comparison and selection system, where the comparison and selection system makes a connection to the individual telecommunications service providers and selects the most favourable from the offerings of the telecommunications service providers
c) making a connection between the comparison and selections system and the telecommunications service providers, where the telecommunications service providers keep ready the current tariff data
d) determining the relevant current tariff for each telecommunications service provider
e) selecting the most favourable telecommunications service provider with the aid of the comparison and selection system
f) making a connection between caller and receiver via the most favourable telecommunications service provider.

2. Method in accordance with Claim 1 characterised in that the making of the connection in accordance with step f to the receiver takes place through a switching system, where the switching system is connected to the comparison and selection system and the telecommunications service providers via a data link.

3. Method in accordance with Claim 1 or 2 characterised in that the comparison and selection system and the evaluation system form components of a common program or two separate programs.

4. Method in accordance with Claim 1 to 3 characterised in that the setting up of the order in accordance with step a) takes place through a data-processing system and that the comparison and selection system is connected both with the caller's data processing system and also with the data processing system of the telecommunications service provider through a data link.

5. Method in accordance with Claim 1 to 4 characterised in that the data-processing system, the comparison and selection system and the telecommunications service provider are connected together through the Internet.

6. Method in accordance with Claim 1 to 5 characterised in that the order is specified at least by the telephone numbers of the caller and of the receiver.

7. Method in accordance with Claim 1 to 6 characterised in that the order in accordance with Claim 6 is specified by other data such as duration of conversation and/or number of conversations per time unit.

8. Method in accordance with Claim 1 characterised in that the setting up of an order in accordance with Step a) is generated automatically by the selection of the call number based on the call number information.

9. Method in accordance with Claim 8 characterised in that the order in accordance with Claim 8 is sent via an additional device to the comparison and selection system.

10. Method in accordance with Claim 1 to 9 characterised in that the order is converted in the comparison and selection system into a data format which can be processed by the telecommunications service provider.

11. Method in accordance with Claim 1 to 10 characterised in that, in the case of the equivalence of two or more quotations, the result in accordance with Step e) is sent to the telecommunications service providers to require an even better quotation or that, of the equivalent quotations, one is chosen.

12. Method in accordance with Steps (sic) 1 to 11 characterised in that the result in accordance with Step e) is passed on to a switching system, where the switching system creates a connection to the receiver and a connection to the caller.

13. Method in accordance with Steps (sic) 1 to 12 characterised in that the connection to the caller is created via a call-back function of the switching system as soon as the connection to the receiver is established.

14. Method in accordance with Claim 1 to 13 characterised in that a key is assigned to the result in accordance with Step e) and advised to the caller and the creation of a connection to the receiver is effected by adding the key to the call number.

15. Method in accordance with Claim 14 characterised in that the key is provided by the telecommunications service provider or the comparison and selection system.

16. Method in accordance with Claim 14 or 15 characterised in that the key is provided with a validity period.

17. Method in accordance with Claim 1 to 16 characterised in that the telecommunications service providers are inter-connected by means of a data link and the comparison and selection system and the switching system is installed with at least one telecommunications service provider.

18. Method in accordance with Claim 1 to 12 characterised in that the caller receives as the result a network preselection of the most favourable telecommunications service providers and a key and then makes the connection himself.
